# EUROPEAN PATENT SPECIFICATION

(11) **EP 3 771 579 B1**
(45) Date of publication and mention of the grant of the patent: **15.02.2023**
(21) Application number: 19188930.2
(22) Date of filing: 29.07.2019
(51) Int. Cl.: B60J 7/057, B60J 7/04, B60J 7/043, B60J 7/02

(54) **METHOD OF OPERATING A CLOSURE OF AN OPEN ROOF CONSTRUCTION FOR A VEHICLE, AND SUCH OPEN ROOF CONSTRUCTION**
VERFAHREN ZUM BETRIEB EINES VERSCHLUSSES EINER OFFENEN DACHKONSTRUKTION FÜR EIN FAHRZEUG SOWIE SOLCH EINE OFFENE DACHKONSTRUKTION
PROCÉDÉ DE FONCTIONNEMENT D'UNE FERMETURE D'UNE CONSTRUCTION DE TOIT OUVRANT POUR VÉHICULE ET UNE TELLE CONSTRUCTION DE TOIT OUVERT

(43) Date of publication of application: 03.02.2021
(73) Proprietor: Inalfa Roof Systems Group B.V., 5807 GW Oostrum (NL)
(72) Inventor: ALBERS,Thomas Anton Martijnszoon, 5801 BN Venray (NL); VERVOORT, Stephan Christiaan, 5831 LD Boxmeer (NL)
(74) Representative: De Vries & Metman

(56) References cited:
- WO-A1-2019/024996
- DE-C1- 19 937 395
- US-A1- 2012 068 503

## Description

The present invention relates to a method of operating a closure of an open roof construction for a vehicle according to the preamble of claim 1, and an open roof construction according to the preamble of claim 5.

A method for operating a closure according to the preamble of claim 1 is known from US 2012/0068503 A1. The step of setting the desired height of the closure in relation to the fixed roof or frame includes mechanically adjusting the height of a glass panel of the closure with respect to a support of the glass panel, in particular by adjusting bolts. This is time consuming and in many cases labour-intensive. Furthermore, it requires mounting space for the adjusting bolts, and space to access the bolts.

It is an object of the present invention to provide a method and open roof construction in which the step of adjusting the closure is easier and more effective.

For this purpose, in the method according to the invention adjusting the height of the closure includes the step of actuating the respective drive members, if necessary, to adjust the position of the closure in a direction from an actual closed position to a desired closed position, and storing the corresponding position of the respective drive members in a memory of the operating mechanism as being the desired closed position.

By using the drive members to adjust the closure, it is not necessary to have adjusting screws at each corner of the closure. The more drive members are provided the more possibilities for adjusting the closure position are given.

The adjustment procedure step may include an adjustment of the support member in a vertical and/or horizontal direction. If each support member is provided with its own drive member for a vertical movement, the whole height of the closure can be adjusted in this manner. This may be an automated procedure. The height of the closure, e.g. the height of the glass panel can either be measured or determined by a tool and the various drive members are actuated until the closure is at the correct height at all support members. For adjusting the horizontal position, it is not necessary to have drive members for all support members. One drive member would be sufficient, but this horizontal drive member should be independent from the drive members for obtaining vertical movements, so that horizontal and vertical adjustment can be accomplished independently.

To obtain a precise adjustment the support member can be driven at a lower speed during the adjustment procedure compared to the speed during normal operation. This can be obtained by reducing the speed of the drive member and/or increasing a transmission ratio during the adjustment procedure.

An open roof construction according to the preamble of claim 5 is known from WO 2019/024996 A1. In this prior art roof, at least each second support member has its own drive member for obtaining an adjustment of the closure at the position of the respective support member, and a control unit includes a memory for controlling movements of the drive members. In the open roof construction according to the invention, the control unit is programmed to perform an adjustment procedure step before its normal operation in which the respective drive members are actuated, if necessary, with the closure in its intended closed position to adjust the position of the closure in a direction from an actual closed position to a desired closed position, the memory being designed to store the corresponding position of the respective drive members as being the desired closed position during the normal operation.

Preferably, the drive motor and/or support member are adapted to enable an adjustment of the support member during the adjustment procedure in a vertical and/or horizontal direction.

The speed of the drive motor and/or a transmission ratio may be adapted to be changed during the adjustment procedure such that the support member is driven at a lower speed during the adjustment procedure compared to the speed during normal operation.

If the support member includes a horizontal drive member combined with a vertical curve provided in a driven slide, it may include a first curve portion having a first inclination and a second curve portion having a second inclination, the first curve portion being used for the adjustment procedure and the first inclination is generally smaller than the second inclination.

The horizontal drive member may include one of a pull cable having a loop attached to and running around a driven pulley engaged by a motor and connected to the respective first and/or second support members, a push-and pull cable engaged by a driven gearwheel and attached to the respective first and/or second support members or for example and endless elongated transmission member, such as a toothed belt driven by a driven toothed wheel and connected to the respective first and/or second support members.

The invention also relates to an operating mechanism for use in the open roof construction as described above.

The invention will be elucidated hereafter with reference to the drawings showing embodiments of the open roof construction according to the invention.
Fig. 1a and 1b show a first embodiment of the open roof construction in very schematic perspective view and in two different positions.
Fig. 2a and 2b show the open roof construction of Fig. 1 in very schematic plan view with only the drive members indicated and in the same positions.
Figs. 3a, 3b are views corresponding to that in Figs. 2a, 2b, but showing a different embodiment of the open roof construction.
Figs. 4a - 4c show the open roof construction of Fig. 2 in side view and on a larger scale, in three different positions.
Fig. 5 is the side view of Fig. 4a, and illustrating how the height of closure can be measured when in closed position.
Fig. 6a is a top view of one of the operating mechanisms of the open roof construction of Fig. 4a.
Fig. 6b is a partly cut-away side view of the operating mechanism of Fig. 6a on a larger scale.
Fig. 7a is a top view similar to that of Fig. 6a, but without frame.
Fig. 7b and 7c are perspective views of the front and rear support members of the operating mechanism of Fig. 7a.
Fig. 7d is an enlarged sectional view according to the line VIId-VIId in Fig. 7a.
Fig. 8a - 8d are simplified side views of the front support member in 4 different positions, illustrating height adjustment of the closure.
Fig. 9 is an alternative embodiment of the front support member of the operating mechanism for the open roof construction.
Figs. 10a, b - 13a, b illustrate very schematically alternative embodiments of the vertical drive system for the support member(s) in two different positions.
Figs. 14 and 15 illustrate in a perspective view alternative embodiments of the horizontal drive system for the support member(s).

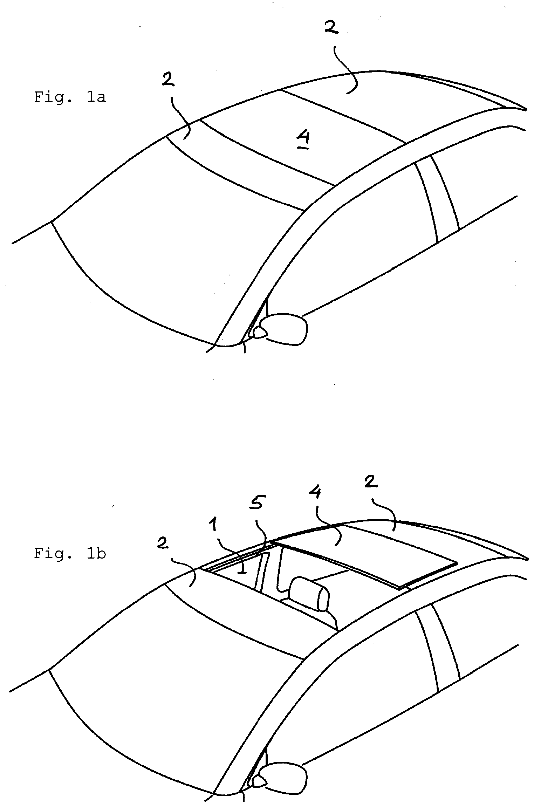

The drawing, and in first instance Fig. 1a - 1b show an open roof construction for a vehicle, in particular a motor vehicle such as a passenger car. As is shown in Fig. 1b, this vehicle is provided with an opening 1 in its fixed roof 2, whereby it is noted that said fixed roof 2 may either form part of the vehicle or of the open roof construction itself, which in that case makes up the entire roof of the vehicle. The fixed roof 2 may consist of an integral part of the vehicle or of one or more (metal or transparent) panels, which may be fixed, removable or form a separate adjustable roof element.

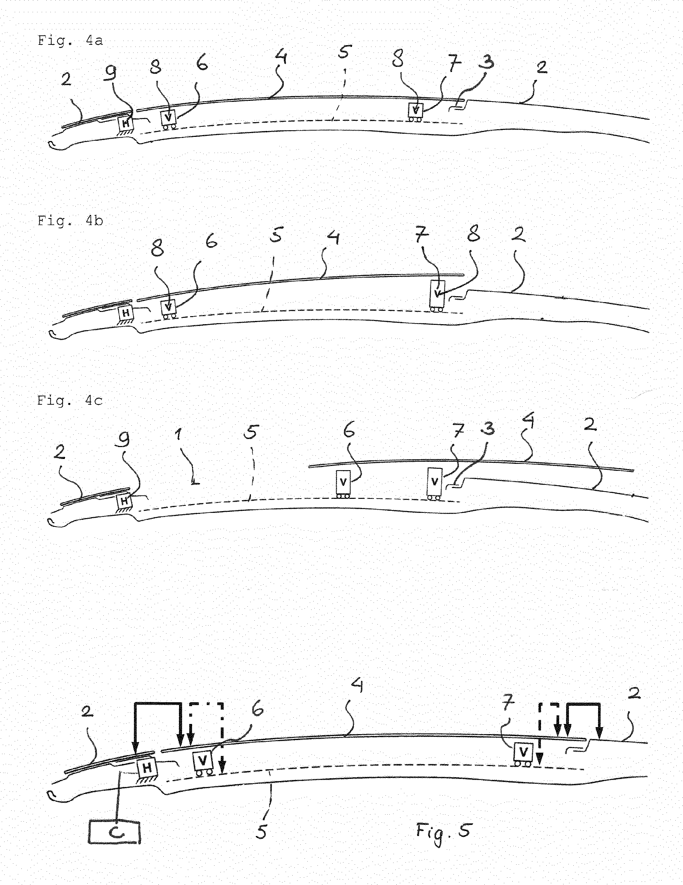

The open roof construction comprises a stationary part, such as a frame 3, and a closure, in this case in the form of a rigid and preferably transparent panel 4, for example made of glass or of plastic material, which is movably supported by frame 3. In this embodiment, panel 4 is movable between a closed position, in which roof opening 1 is closed and panel 4 is at least substantially coplanar with fixed roof 2, and an open position, in which panel 4 occupies a rearward position, at least partially above the fixed roof 2 (or a second rigid panel, not shown), in which at least a part of opening 1 is cleared. In the embodiment shown, panel 4 is first tilted from the closed position (Fig. 1a and 4a) to a venting position in which the rear edge of panel 4 is moved upwardly (Fig. 4b), and then moved rearwardly to positions above the fixed roof 2 (Fig. 1b and 4c).

An operating mechanism is provided on each longitudinal side of panel 4 for effecting the movements of panel 4. In this case, the operating mechanism is supported by guide rails 5 (Fig. 4) extending substantially parallel in longitudinal direction of the vehicle and mounted alongside the roof opening 1. The operating mechanism comprises on each guide rail 5 a first or front support member 6 supporting panel 4 near its front side. A second or rear support member 7 supports panel 4 a distance behind front support member 6. Other concepts are conceivable as well, for example one including a single or double central guide rail (splitting the opening 2 in two half openings) carrying one or two front support members 6, and two rear support members 7. Still other variations are possible.

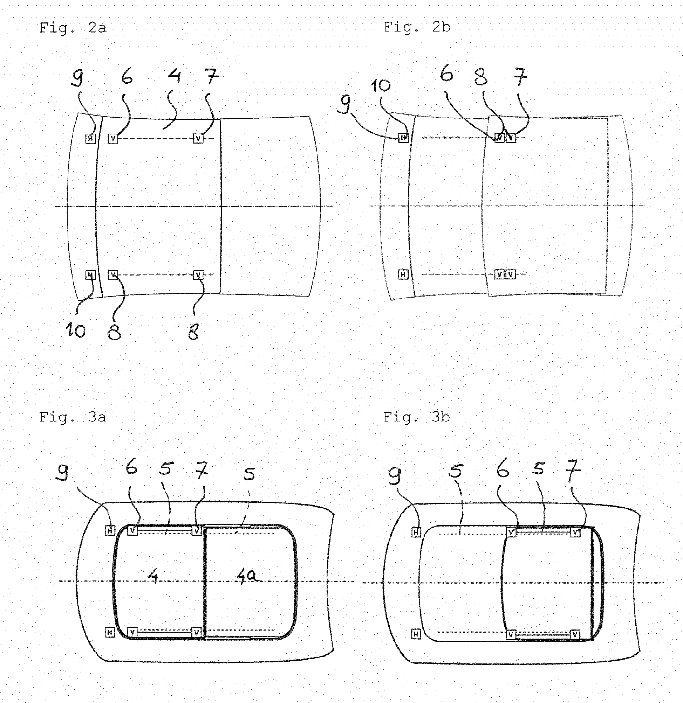

As mentioned, panel 4 is supported by four support members 6, 7, each supporting panel 4 in a corner thereof when panel 4 is in its closed position. In the spoiler-type of roof as shown in Figs. 2 and 4, rear support members 7 are substantially fixed in horizontal direction, and are adjustable in vertical direction only (compare Fig. 2a and 2b). The small horizontal displacement as shown by a comparison of Figs. 3a and 3b is the result of the vertical adjustment, not of a displacement by a horizontal drive member.

The front support members 6 are adjustable in horizontal and vertical direction. For vertical adjustment of front and rear support members 6, 7 they each comprise their own vertical drive member/drive system 8 indicated by V in Figs. 2 and 3. Front support members 6 are adjustable in horizontal direction by means of their own horizontal drive member/drive system 9 (also indicated by an H), in the embodiment of Figs. 2 and 3 in the form of an electric motor controlled by a central control unit and connected to both front support members 6 through connecting elements 12. These may include for example elongated flexible connecting members, such as push-and-pull cables engaged with an output gear of the electric motor, or by other members described with reference to Figs. -6 - 8. As is shown, the parts of the front support members 6 that cause the vertical adjustment of panel 4 are at least partly moving with panel 4 when it is driven by horizontal drive system 9. The support member 6, 7 comprises the parts between panel 4 and guide rail 5 or stationary part 3.

The rear support members 7 are connected to panel 4 through a panel guide rail 5a (not shown in Fig. 2, 4) such that, when front support members 6 move horizontally after rear support members 7 have lifted the rear side of panel 4 upwardly (Fig. 4b), panel 4 slides along rear support members 7 to a position in which a substantial part of roof opening 1 is opened (Fig. 4c). For making these movements, the front and rear support members 6, 7 are adjusted in vertical direction independently from each other and independently from the horizontal displacement, so that panel 4 can be allowed to make all the movements that are desirable. For example, it is easy to adjust rear support members 7 in vertical direction when panel 4 is moved backwardly, so that panel 4 is positioned vertically as close as possible to fixed roof 2 in rear positions.

Fig. 3 shows an embodiment of the open roof construction in the form of a top slider in which a second panel 4a (mostly fixed) is mounted behind panel 4 when in closed position. Guide rails 5 are extended backwardly so that they also extend at the sides of rear panel 4a and at least the rear support members 7 may move rearwardly alongside rear panel 4a. In this embodiment, the first and second support members 6, 7 on each guide rail 5 have a common horizontal drive system 9 and thus slide together as a unit (compare Fig. 3a and 3b). The front and rear support members 6, 7 each have their own vertical drive system 8, so the vertical adjustment of the front and rear side of panel 4 is independent of the horizontal displacement, and in this case also independent of each other so that the vertical position of the panel 4 can be perfectly adjusted to the horizontal position of panel 4. For the sake of completeness it is noted that the horizontal drive system 9 could also drive front support members 6 only, while rear support members 7 are moved by panel 4 or through other connecting means.

The fact that the vertical adjustment of panel 4 is independent from the horizontal adjustment thereof can be used for setting the correct position of panel 4 in its closed position with respect to fixed roof 2 of the vehicle. For optimal functioning and appearance of the roof structure, it is important to have panel 4 positioned within roof opening 1 in an exact manner, both horizontally and vertically, so that panel 4 is centred within roof opening 1 so as to load a seal surrounding panel 4 evenly and is substantially coplanar with surrounding fixed roof 2 to avoid disturbing the airflow when the vehicle is driving and to obtain a high quality appearance.

Fig. 5 illustrates the principle of setting the height of panel 4 in its closed position. As mentioned, this height is important in relation to fixed roof 2 of the vehicle. The arrows with solid lines illustrate that the height of the upper surface of panel 4 can be determined in relation to the upper surface of fixed roof 2 in several places, in fact at every position where an adjustable support member 6, 7 is present, in this case in each corner of substantially rectangular panel 4. However, it is not always possible or feasible to set the position of panel 4 when the open roof construction is built-in into the vehicle. In that case the height of panel 4 can be determined and set in relation to frame 3 or a part fixed thereon, such as guide rail 5, (indicated by arrows with dashed lines) such that the vehicle manufacturer is aware of the panel position and can mount frame 3 to the vehicle roof with panel 4 in the correct position in relation to fixed roof 2.

Setting the height of panel 4 can be done in various ways. First of all, it is possible to use a mechanical hard stop at the correct position of panel 4. Such stop will be present at all corners of panel 4 where such adjustable support member 6, 7 is arranged. The vertically adjustable support members 6, 7 will be actuated from either a low position upwardly or a high position downwardly until panel 4 is stopped by the various stops. This is measured, for example by measuring the current through the electric motors of the vertical drive systems 8, which current will rise drastically when panel 4 is halted. The position of the support members 6, 7 is then stored in the memory of the control unit C as being the desired height of panel 4 in its closed position. The advantage of this method is that it is not necessary to communicate with an external device. The adjustment procedure can be done completely by the software and hardware of the open roof construction once the stops are in their correct position.

Instead of a hard or mechanical stop it is possible to use a contact switch which is held in the correct height and is switched if panel 4 reaches the correct height and actuates the switch which is connected to the respective electric motor of the vertical drive system 8 and thus switches-off the motor, which position is again stored in the memory. A proximity switch may replace the contact switch.

Another method of determining the correct position of panel 4 is making use of a height gauge which measures and compares the heights of panel 4 and of the adjacent fixed roof 2 or frame 3. The support members 6, 7 are then actuated until the desired height is reached and the position is stored. The height gauges can e.g. be of the ultrasonic- or laser-type.

A novel method recently introduced by car manufacturers is the optical 3D scan to frame the vehicle in order to check the quality of the bodywork in respect of clearances between and relative heights of body parts. Thus, also the relative height between panel 4 and fixed roof 2 can be determined and corrections by actuating the adjustable support members 6, 7 can be performed to bring the upper surface of panel 4 in line with that of the adjacent upper surface of fixed roof 2. A white-light scanner can be used as this is able to scan the surface of the glass panel without being hindered by glass reflections.

Adjusting the horizontal position of panel 4 is nowadays generally dependent of the water drainage system of the open roof construction. There are now two types of water draining systems:

### a) 'internal' water management

This is present in open roof constructions having a frame 3 comprising water channels below the edges of panel 4 to drain water to draining hoses connected to drain pipes of the frame and arranged in the A- or C-posts of the passenger car. This kind of roofs normally have one or more bulb-seals between the outer edge of panel 4 and the inner edge of roof opening 1. Nowadays such water management and seal structure are generally used in so-called bottom-loaded roof systems.

### b) 'external' water management

This system is normally used in open roof constructions wherein frame 3 is loaded from above (top-loaded roofs) and is then glued onto fixed roof 2. A bulb-seal is arranged between panel 4 and frame 3 of the open roof constructions. A wet area is present outwardly of the bulb-seal and drip water can be drained-off at the outside of frame 3 through clearances of the bodywork.

Ad a) In an internal water management system, there are a few horizontal adjustment methods:
1) Panel 4 is set in an X-position by the manufacturer of the open roof construction. The vehicle manufacturer, when mounting the open roof construction into the vehicle, is "floating" panel 4 of the open roof construction into roof opening 1, that means that it allows panel 4 to search for its correct position within roof opening 1 in which the pressure of the seals on opposite sides of panel 4 is in balance. The frame 3 of the open roof construction is then screwed to fixed roof 2 of the vehicle. The screws should extend through holes slotted in X-direction in order to be able to move frame 3 in X-direction until panel 4 is in its correct position within roof opening 1.
2) The manufacturer of the open roof construction supplies it to the vehicle manufacturer with panel 4 set in a predefined X-position. After the open roof construction has been mounted into the vehicle, panel 3 is moved back and forth until it is blocked by the seal supports. The positions of the panel 4 upon reaching a certain motor current is determined. The correct center position of panel 4 is then in the middle between these two extreme positions. The panel 4 is then moved to this position and the position is stored in the memory as being the closed position.
3) An optical 3D scan can be used in the same way as with the vertical adjustment.

Ad b) In an external water management system, the possibilities are e.g. as follows:
1) Panel 4 is set by the manufacturer of the open roof construction in a predefined X-position with respect to frame 3. When the vehicle manufacturer is mounting the open roof construction into the vehicle, the correct position of panel 4 within roof opening 1 is set when the glue used for attaching frame 3 to fixed roof 2 is still sufficiently fluid. Any remaining misalignments in X- or Z-direction could be corrected by any of the methods described above.
2) Panel 4 is again set by the manufacturer of the open roof construction in a predefined X-position. The vehicle manufacturer then mounts the open roof construction into the vehicle and when frame 3 has been attached to fixed roof 2, the position of panel 4 with respect to fixed roof 2 can be determined and adjusted in the same manner as described with reference to the vertical adjustment.

Depending on the type of support members 6, 7 used, it may happen that the "vertical" and "horizontal" adjustments thereof are not exactly perpendicular to panel 4 or fixed roof 2 so that a horizontal or vertical compensation movement might be necessary to "maintain" the original correct horizontal or vertical position. This can be done automatically if the panel movements in dependence of the support member movements are known by the memory of the control unit.

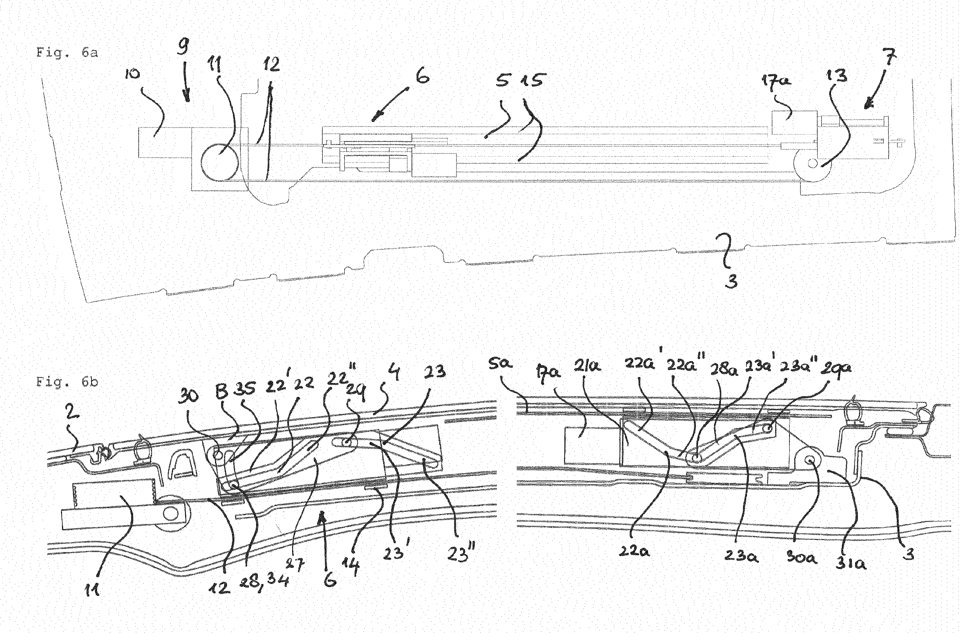

Fig. 6, 7 and 8 show an example of the support members of panel 4 and their drive members.

Figs. 6a and 6b show the horizontal drive system 9 for moving at least the front support member 6. The horizontal drive system 9 includes an electric motor 10, a driven pulley 11 drivably connected to electric motor 10, a cable 12, attached to and running around pulley 11 and around a freely rotating pulley 13, while the cable is also attached to front support member 6 in order to slide it along guide rail 5. Cable 12 is not formed as a closed loop, but its ends are attached to driven pulley 11, so that one end is rolled-up, while the other end is unrolled when pulley 11 is rotated. This ensures that cable 12 has a fixed relationship to driven pulley 11, so that slip between cable 12 and pulley 11 cannot occur.

Front support member 6 comprises a slide 14 engaging guide rail 5 so as to be slidable on the one hand, but properly guided on the other hand. The slide 14 supports a housing 16 to which an electric motor 17 is attached. The electric motor 17 has an output shaft which is provided with a linear screw spindle 18a adapted to move a spindle nut/drive member 18b back and forth. The drive member 18b carries a sidewardly protruding cam 19 engaging a recess 20 in a curve plate 21 including a first and second slot 22, 23. Curve plate 21 is thus slidable in longitudinal direction with respect to slide 14 and is supported and guided by a vertical wall 24.

As is shown in Fig. 6b, a lever 27 has a first pin 28 slidably engaging first slot 22 and a second pin 29 slidably engaging second slot 23. A pivot 30 pivotally connects lever 27 to a bracket (not shown) of panel 4. Slots 22 and 23 include a first slot portion 22', 23' which has a first slope and a connecting second slot portion 22", 23" having a second, steeper slope. Lever 27 has its pins 28, 29 engage first slot portions 22', 23' when it is in its lower positions. A pin 34 engages in arced slot 35 limiting rotation of lever 27 and providing additional stability to lever 27. Cable 12 is provided with cable fasteners (not shown) to attach cable 12 to front support member 6 through holes (not shown) in slide 14.

The parts of rear support member 7 are in this case more or less the same as that of front support 6, but being mounted to the lower side of panel 4 instead of to the upper side of frame 3. All parts of rear support member 7 are therefore mounted upside down with respect to the parts of front support member 6. Guide rail 5a is thus attached to the lower side of panel 4, while pivot 30a of lever 27a rotates in a bracket 31a attached to frame 3. In curve plate 21a, slots 22a, 23a are now connected, and pins 28a, 29a of lever 27a are used to engage slots 22a, 23a. Second slot 23a again has a first slot portion 23a' and a steeper second slot portion 23a", wherein first slot portion 23a' is used to set the height of panel 4 in its closed position.

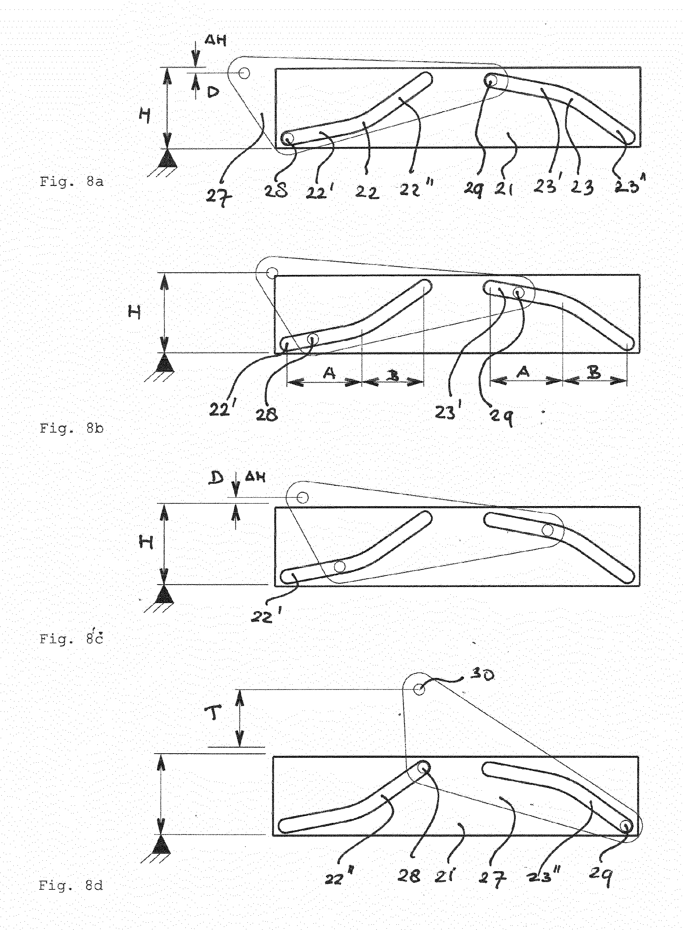

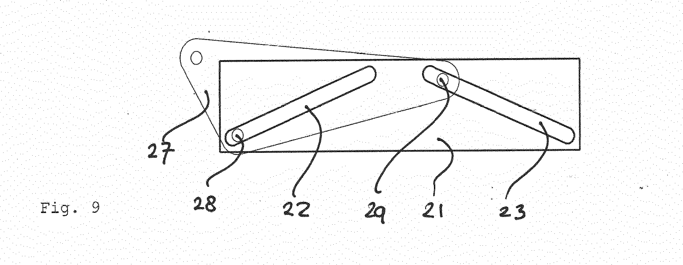

Fig. 8 shows various positions of curve plate 21 and lever 27 of front support member 6. Figs. 8a, 8b and 8c show two extreme and a center position (Fig. 8b) of pins 28, 29 in first slot portions 22', 23' of first and second slot 22, 23, which positions correspond to positions of panel 4 around its closed position within roof opening 1. Measure H indicates the actual height of lever pivot 30/panel 4 with respect to a reference point, either fixed roof 2 or frame 3. Measure ΔH indicates the deviation of this actual height H with respect to desired height D. The desired height D can be lower (Fig. 8a) or higher (Fig. 8c) than the actual height H. The positions of pins 28, 29 in first slot portions 22', 23' are used for the panel adjustment procedure in which the correct height of panel 4 in its closed position is set by adjusting panel 4 from the actual height H to the desired height D. The position of curve plate 21 corresponding to desired height D is stored in the memory of control unit C (Fig. 5) as being the closed position. Due to the minor slope, i.e. small angle of first slot portions 22', 23' lever 27 is only rotated to a small extent per rotation of the electric motor 17 if it is actuated (and thus per displacement of curve plate 21), so that a very accurate height of panel 4 in its closed position can be obtained. Length A of slot 22, 23 can be used mainly for panel height adjustment, while length B with steeper slope slot portions 22'', 23" is used for normal operation of panel 4. In Fig. 9d, lever 27 has been rotated such that panel connection 30 has been lifted a distance T above desired height D in Fig. 8c.

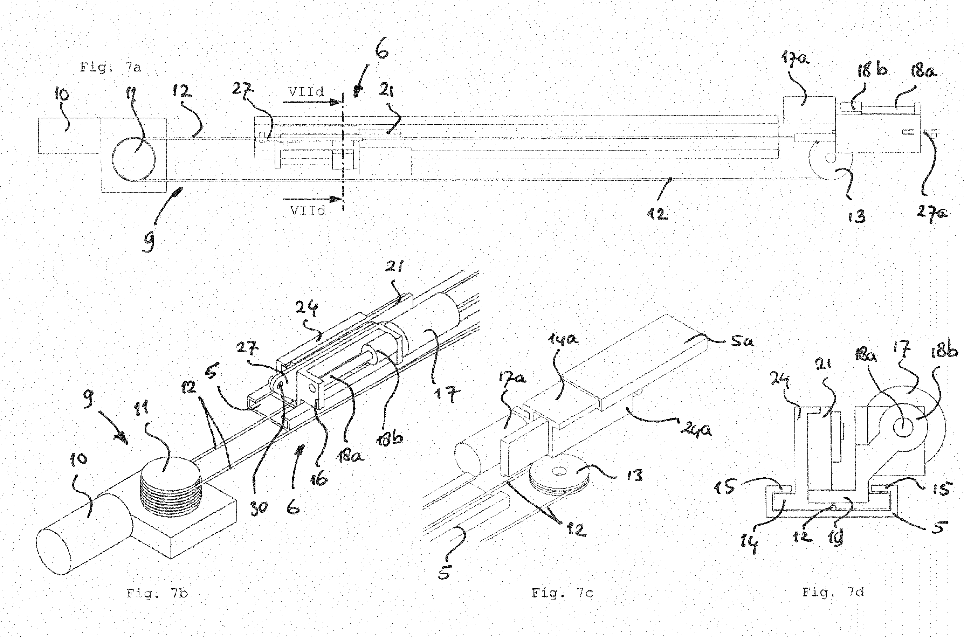

As can be seen from Figs. 6 and 7, some parts of front and rear support members 6, 7 are slightly different (e.g. lever 27, 27a, curve plate 21, 21a), but others are exactly the same (e.g. slide 14, 14a, electric motor 10, 10a, spindle drive, guide rail 5, 5a), which reduces the total number of different parts for the operating mechanism. Another advantage of attachment of the drive member/electric motor 10a to panel 4 is that it moves away from guide rail 5 when panel 4 is moved upwardly at the rear side. This would make it possible to extend guide rail 5 rearwardly and allow front support member 6 to move rearwardly without being blocked by electric motor 17a of rear support member 7 if that would be attached to frame 3. This allows more design freedom and/or a smaller package.

Electric motor 17a must of course be connected to a power supply (not shown). The source may be the same as for electric motor 10 on frame 3 and as the motor 17a only makes small movements, the connection may be made by a normal or flat cable. For larger movements, use can be made of sliding contacts or a flat cable, for example in the case of electric motor 17 on slide 14. Fig. 8d shows lever 27 in its upper position. This upper position is obtained by relatively sliding first and second pins 28, 29 through second slot portions 22", 23" of first and second slot 22, 23, which have a steeper slope and thus lever 27 is rotated to a larger extent upon a certain number of rotations of electric motor 17, compared to first slot portions 22', 23'.

Fig. 9 shows an alternative curve plate 21 of front support member 6 in which first and second slots 22, 23 only have a single slot portion, or at least do not have a special first slot portion 22', 23' having a smaller angle to the horizontal for setting/adjusting the height of panel 4 in its closed position. In this alternative embodiment, the height adjustment of panel 4 is obtained by having an electric motor that can be energized in two different modes: an adjusting mode rotating at relative low speeds, and an operating mode rotating at a higher speed. In this way it is possible to obtain a fine setting at a low speed of the panel, not by a greater reduction in the transmission between motor and panel, but by a reduced speed of the motor itself.

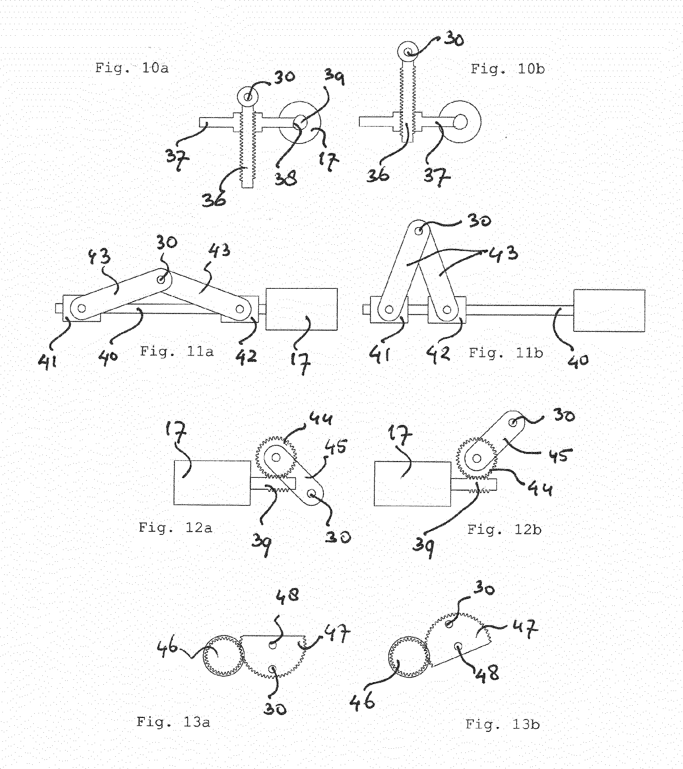

Figs. 10 - 13 show alternative drive systems for obtaining a vertical and horizontal adjustment of panel 4.

Figs. 10a, 10b show a direct spindle drive in which a substantially vertical, linear spindle 36 is connected to panel 4 (not shown) at its upper end with pivot 30. A spindle nut 37 is rotatably supported on frame 3 and the outer circumference of spindle nut 37 is configured as a worm wheel 38 cooperating with a worm 39 mounted on the output shaft of electric motor 17.

Figs. 11a, 11b show an embodiment in which a horizontal linear spindle 40 is provided on output shaft of electric motor 17. The spindle 40 is journaled in block 41 on its free end and is provided with a spindle nut 42 on its screw thread. The block 41 and spindle nut 42 each carry the lower end of a corresponding rotatable arm 43 the other ends of which are rotatably connected to each other so that a scissor-like structure is formed, such that the connection of both arms carrying pivot 30 moves up and down if spindle 40 is rotated and spindle nut 42 moves back and forth.

Figs. 12a, 12b show another variation in which the output shaft of electric motor 17 is provided with worm 39 engaging a worm wheel 44 to which an end of an arm 45 is fixedly attached the other end of arm can be connected to panel 4 through pivot 30.

Figs. 13a, 13b show a last embodiment in which a toothed gear wheel 46 on output shaft of electric motor engages with another toothed wheel 47 of which a point outside the center 48 can be connected to panel 4 through pivot 30.

In all solutions for the vertical movement, if the vertical movement causes an (unwanted) horizontal movement as well, this can be compensated by an opposite horizontal movement performed by the horizontal adjustment member. This can be programmed in the software of the control unit. From the foregoing it is clear that the invention provides an open roof construction for a vehicle and an operating mechanism for use therein which make it possible to adjust the height of the closure in its closed position before it is put in operation (again).

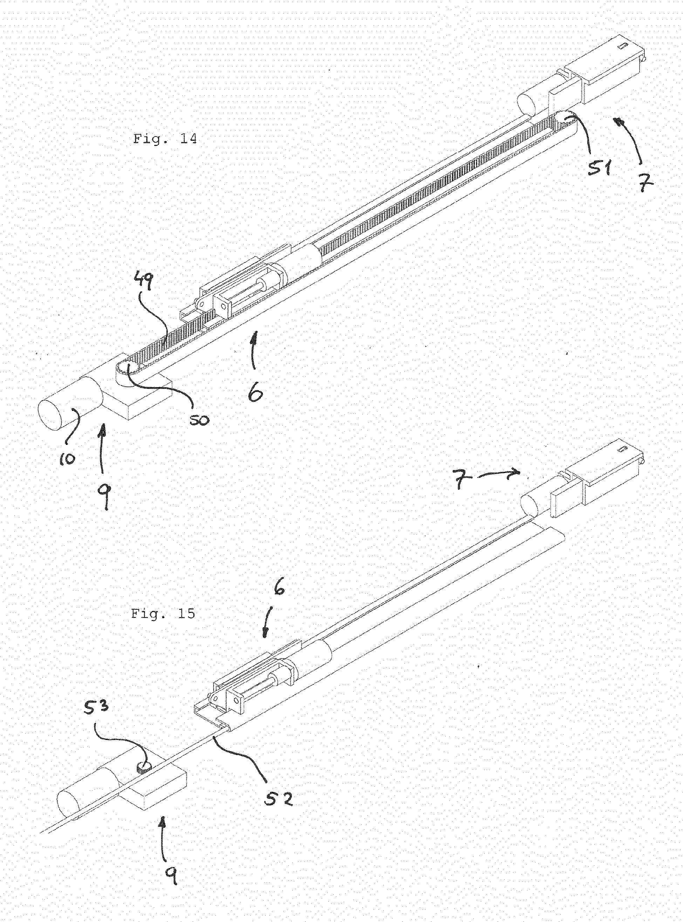

Figs. 14, 15 show alternative embodiments of the horizontal drive system 9, for example for front support member 6.

Fig. 14 shows an embodiment in which cable 12 is replaced by an endless toothed belt 49 running along driven toothed wheel 50 and idle toothed wheel 51. Belt 49 is attached to slide 14 of front support 6.

In the embodiment of Fig. 15, cable 12 is replaced by push and pull cable 52 driven by gear wheel 53 and attached to slide 14 of front support 6. Other horizontal drive systems 9 are conceivable.

The invention is not limited to the embodiment shown in the drawing and described above which may be varied in different manners within the scope of the appended claims.

For example, the adjustment procedure step can be performed not only before its first use, but also after repairs or other events which necessitate renewed adjustment of the height of the closure in its closed position. It is also possible to use the invention for other types of open roof constructions, such as for a so-called inslider type roof, in which the closure panel can be moved downwardly from its closed position in order to be moved rearwardly below the fixed roof. Other roof types and other closure elements, such as slats or multi panels are conceivable as well. The terms vertical and horizontal as used herein should be considered in a broad sense. It will depend on the orientation of guide rails 5 or frame how the movement of the support members will be. Vertical means substantially perpendicular to the local orientation of the guide rail/frame and horizontal means substantially parallel to the guide rail. The guide rails can be slightly curved so that the orientation of the front support members will vary if they move along their guide rail.

The adjustment procedure using the vertical adjustment members can be used for adjustment of the closure height at the front or rear only, while at the opposite end the adjustment is done in another way, for example by adjustment screws. This is for example conceivable if the panel is only pivotable at its front, so that no vertical adjustment member is present there.

## Claims

1. Method of operating a closure (4) of an open roof construction in a vehicle having a roof opening (1) in its fixed roof (2), the closure being adjustable between a closed position, in which it closes the roof opening, and an open position in which it is at least partly moved out of the roof opening, wherein an operating mechanism of the open roof construction comprises at least one adjustable first support member (6) adjustably supporting the closure near its front side, and adjustable second support members (7) adjustably supporting the closure a distance behind the front support, , the method including an adjustment procedure step before its normal operation, the adjustment procedure includes:
putting the closure in its intended closed position in the roof opening, and adjusting the height of the closure, **characterized in that** at least each second support member (7) has its own drive member (8; 9) for obtaining an adjustment of the closure at the position of the respective support member; adjusting the height of the closure (4) includes the steps of:
actuating the respective drive members (8; 9), if necessary, to adjust the position of the closure in a direction from an actual closed position to a desired closed position, and
storing the corresponding position of the respective drive members (8; 9) in a memory of a control unit (C)of the operating mechanism as being the desired closed position.

2. The method of claim 1, wherein the adjustment procedure step includes an adjustment of the at least second support member (7) in a vertical and/or horizontal direction.

3. The method of claim 1, wherein the support member is driven at a lower speed during the adjustment procedure compared to the speed during normal operation.

4. The method of claim 3, wherein the speed of the drive member and/or a transmission ratio is changed during the adjustment procedure such that the support member is driven at a lower speed during the adjustment procedure compared to the speed during normal operation.

5. Open roof construction for a vehicle having a roof opening (1) in its fixed roof (2), comprising a stationary part (3) for attachment to the fixed roof, carrying at least two guide rails (5) alongside the roof opening, at least one closure (4) having a front and a rear side and being supported by an operating mechanism guided on the guide rails, the closure being adjustable between a closed position, in which it closes the roof opening, and an open position in which it is at least partly moved out of the roof opening, wherein the operating mechanism comprises at least one adjustable first support member (6) adjustably supporting the closure near its front side, and adjustable second support members (7) adjustably supporting the closure a distance behind the front side, the closure being adjustable between a closed position, in which it closes the roof opening, and an open position in which it is at least partly moved out of the roof opening, at least each second support member (7) having its own drive member (8, 9) for obtaining an adjustment of the closure at the position of the respective support member, and a control unit (C) including a memory for controlling movements of the drive members, **characterized in that** the control unit is programmed to perform an adjustment procedure step before its normal operation in which the respective drive members (8, 9) are actuated, if necessary, with the closure (4) in its intended closed position to adjust the position of the closure in a direction from an actual closed position to a desired closed position, the memory being designed to store the corresponding position of the respective drive members as being the desired closed position during the normal operation.

6. The open roof construction of claim 5, wherein the drive member (8, 9) and/or at least the second support member (6, 7) are adapted to enable an adjustment of at least the second support member during the adjustment procedure in a vertical and/or horizontal direction.

7. The open roof construction of claim 6, wherein the speed of the drive member (8, 9) and/or a transmission ratio are adapted to be changed during the adjustment procedure such that at least the second support member (7) is driven at a lower speed during the adjustment procedure compared to the speed during normal operation.

8. The open roof construction of any of claims 5 - 7, wherein at least the second support member (7) includes a horizontal drive member (9) combined with a vertical curve (22, 23), a lever (27), a vertical spindle (36) or the like.

9. The open roof construction of any of claims 5 - 8, wherein the horizontal drive member includes one of a pull cable (12) having a loop attached to and running around a driven pulley (11) engaged by a motor (10) and connected to the respective first and/or second support members (6, 7, an endless elongated transmission member, such as a toothed belt (49) driven by a driven toothed wheel (50) and connected to the respective first and/or second support members (6, 7), or a push-and pull cable (52) engaged by a driven gearwheel (53) and attached to the respective first and/or second support members (6, 7)

10. The open roof construction of claim 8, wherein the vertical curve (22, 23) is provided in a driven slide (14) and includes a first curve portion (22', 23') having a first inclination and a second curve portion (22", 23") having a second inclination, the first curve portion being used for the adjustment procedure and the first inclination is generally smaller than the second inclination.

## Patentansprüche

1. Verfahren zur Betätigung eines Verschlusselements (4) einer Offendachkonstruktion in einem Fahrzeug mit einer Dachöffnung (1) in dessen Festdach (2), wobei das Verschlusselement zwischen einer Geschlossen-Position, in welcher es die Dachöffnung verschließt, und einer Offen-Position, in welcher es zumindest teilweise aus der Dachöffnung herausbewegt ist, verstellbar ist, wobei ein Betätigungsmechanismus der Offendachkonstruktion mindestens ein verstellbares erstes Stützelement (6), welches das Verschlusselement nahe dessen Vorderseite verstellbar stützt, und verstellbare zweite Stützelemente (7), welche das Verschlusselement in einem Abstand hinter dem vorderen Stützelement verstellbar stützen, aufweist, wobei das Verfahren einen Einstellprozedur-Schritt vor seinem Normalbetrieb aufweist, wobei die Einstellprozedur aufweist:
Verbringen des Verschlusselements in seine vorgesehene Geschlossen-Position in der Dachöffnung und Einstellen der Höhe des Verschlusselements, **dadurch gekennzeichnet, dass** zumindest jedes zweite Stützelement (7) sein eigenes Antriebselement (8; 9) zum Erreichen einer Verstellung des Verschlusselements an der Position des jeweiligen Stützelements aufweist,
das Einstellen der Höhe des Verschlusselements (4) aufweist die Schritte des:
Betätigens der jeweiligen Antriebselemente (8; 9) je nach Bedarf, um die Position des Verschlusselements in einer Richtung von einer tatsächlichen Geschlossen-Position zu einer gewünschten Geschlossen-Position zu verstellen, und
Speicherns der zugehörigen Position der jeweiligen Antriebselemente (8; 9) in einem Speicher einer Steuereinrichtung (C) des Betätigungsmechanismus als die gewünschte Geschlossen-Position.

2. Das Verfahren nach Anspruch 1, wobei der Einstellprozedur-Schritt eine Verstellung des mindestens zweiten Stützelements (7) in vertikaler und/oder horizontaler Richtung aufweist.

3. Das Verfahren nach Anspruch 1, wobei das Stützelement während der Einstellprozedur mit einer geringeren Geschwindigkeit angetrieben wird verglichen mit der Geschwindigkeit während des Normalbetrieb.

4. Das Verfahren nach Anspruch 3, wobei die Geschwindigkeit des Antriebselements und/oder ein Übersetzungsverhältnis während der Einstellprozedur so verändert wird, dass das Stützelement mit einer geringeren Geschwindigkeit während der Einstellprozedur angetrieben wird verglichen mit der Geschwindigkeit während des Normalbetriebs.

5. Eine Offendachkonstruktion für ein Fahrzeug mit einer Dachöffnung (1) in seinem Festdach (2), aufweisend einen stationären Teil (3) zur Anbringung an dem Festdach, welcher mindestens zwei Führungsschienen (5) entlang der Dachöffnung trägt, mindestens ein Verschlusselement (4), welches eine Vorderseite und eine Hinterseite aufweist und durch einen an den Führungsschienen geführten Betätigungsmechanismus gestützt wird, wobei das Verschlusselement zwischen einer Geschlossen-Position, in welcher es die Dachöffnung verschließt, und einer Offen-Position, in welcher es zumindest teilweise aus der Dachöffnung herausbewegt ist, verstellbar ist, wobei der Betätigungsmechanismus mindestens ein verstellbares erstes Stützelement (6), welches das Verschlusselement nahe dessen Vorderseite verstellbar stützt, und einstellbare zweite Stützelemente (7), welche das Verschlusselement in einem Abstand hinter der Vorderseite verstellbar stützen, aufweist, wobei das Verschlusselement zwischen einer Geschlossen-Position, in welcher es die Dachöffnung verschließt, und einer Offen-Position, in welcher es zumindest teilweise aus der Dachöffnung herausbewegt ist, verstellbar ist, wobei zumindest jedes zweite Stützelement (7) sein eigenes Antriebselement (8, 9) zum Erreichen einer Verstellung des Verschlusselements an der Position des jeweiligen Stützelements aufweist, und eine Steuereinrichtung (C), welche einen Speicher zum Steuern der Bewegungen der Antriebselemente aufweist, **dadurch gekennzeichnet, dass** die Steuereinrichtung so programmiert ist, dass sie vor ihrem Normalbetrieb einen Einstellprozedur-Schritt durchführt, in welchem die jeweiligen Antriebselemente (8, 9) je nach Bedarf betätigt werden, wobei sich das Verschlusselement (4) in seiner vorgesehenen Geschlossen-Position befindet, um die Position des Verschlusselements in einer Richtung von einer tatsächlichen Geschlossen-Position zu einer gewünschten Geschlossen-Position hin zu verstellen, wobei der Speicher so eingerichtet ist, dass er die zugehörige Position der jeweiligen Antriebselemente als die gewünschte Geschlossen-Position während des Normalbetriebs speichert.

6. Die Offendachkonstruktion nach Anspruch 5, wobei das Antriebselement (8, 9) und/oder zumindest das zweite Stützelement (6, 7) dazu eingerichtet sind, eine Verstellung zumindest des zweiten Stützelements während der Einstellprozedur in vertikaler und/oder horizontaler Richtung zu ermöglichen.

7. Die Offendachkonstruktion nach Anspruch 6, wobei die Geschwindigkeit des Antriebselements (8, 9) und/oder ein Übersetzungsverhältnis während der Einstellprozedur derart veränderbar sind, dass zumindest das zweite Stützelement (7) während der Einstellprozedur mit einer geringeren Geschwindigkeit als verglichen mit der Geschwindigkeit während des Normalbetrieb angetrieben wird.

8. Die Offendachkonstruktion nach einem der Ansprüche 5 - 7, wobei zumindest das zweite Stützelement (7) ein Horizontalantriebselement (9) in Kombination mit einer vertikalen Kurve (22, 23), einem Hebel (27), einer vertikalen Spindel (36) oder dergleichen aufweist.

9. Die Offendachkonstruktion nach einem der Ansprüche 5 - 8, wobei das Horizontalantriebselement aufweist eines von einem Zugseil (12) mit einer Schlaufe, die angebracht ist an einer und herumläuft um eine angetriebene Rolle (11), welche mit einem Motor (10) in Eingriff ist, und mit den jeweiligen ersten und/oder zweiten Stützelementen (6, 7) verbunden ist, einem endlosen, länglichen Übertragungselement, wie z.B. einen Zahnriemen (49), welcher von einem angetriebenen Zahnrad (50) angetrieben wird und mit den jeweiligen ersten und/oder zweiten Stützelementen (6, 7) verbunden ist, oder einem Zug- und Druckkabel (52), welches mit einem angetriebenen Zahnrad (53) in Eingriff ist und an den jeweiligen ersten und/oder zweiten Stützelementen (6, 7) angebracht ist.

10. Die Offendachkonstruktion nach Anspruch 8, wobei die vertikale Kurve (22, 23) in einem angetriebenen Schlitten (14) vorgesehen ist und einen ersten Kurvenabschnitt (22', 23') mit einer ersten Neigung und einen zweiten Kurvenabschnitt (22", 23") mit einer zweiten Neigung aufweist, wobei der erste Kurvenabschnitt für die Einstellprozedur verwendet wird und die erste Neigung im Allgemeinen kleiner als die zweite Neigung ist.

## Revendications

1. Procédé de fonctionnement d'une fermeture (4) d'une construction de toit ouvrant dans un véhicule ayant une ouverture de toit (1) dans son toit fixe (2), la fermeture étant réglable entre une position fermée, dans laquelle elle ferme l'ouverture de toit, et une position ouverte dans laquelle elle est au moins partiellement déplacée hors de l'ouverture de toit, dans lequel un mécanisme de fonctionnement de la construction de toit ouvrant comprend au moins un premier élément de support (6) réglable supportant de manière réglable la fermeture près de son côté avant, et des deuxièmes éléments de support (7) réglables supportant de manière réglable la fermeture à une distance derrière le support avant, le procédé comportant une étape de procédure de réglage avant son fonctionnement normal, la procédure de réglage comporte :
la mise de la fermeture dans sa position fermée souhaitée dans l'ouverture de toit, et le réglage de la hauteur de la fermeture, **caractérisé en ce qu'**au moins chaque deuxième élément de support (7) a son propre élément menant (8 ; 9) pour obtenir un réglage de la fermeture à la position de l'élément de support respectif ;
le réglage de la hauteur de la fermeture (4) comporte les étapes consistant à :
actionner les éléments menants (8 ; 9) respectifs, si nécessaire, pour régler la position de la fermeture dans une direction depuis une position fermée réelle jusqu'à une position fermée souhaitée, et
stocker la position correspondante des éléments menants (8 ; 9) respectifs dans une mémoire d'une unité de commande (C) du mécanisme de fonctionnement comme étant la position fermée souhaitée.

2. Procédé selon la revendication 1, dans lequel l'étape de procédure de réglage comporte un réglage de l'au moins deuxième élément de support (7) dans une direction verticale et/ou horizontale.

3. Procédé selon la revendication 1, dans lequel l'élément de support est mené à une vitesse plus faible durant la procédure de réglage par rapport à la vitesse durant un fonctionnement normal.

4. Procédé selon la revendication 3, dans lequel la vitesse de l'élément menant et/ou un rapport de transmission sont changés durant la procédure de réglage de sorte que l'élément de support soit mené à une vitesse plus faible durant la procédure de réglage par rapport à la vitesse durant un fonctionnement normal.

5. Construction de toit ouvrant pour un véhicule ayant une ouverture de toit (1) dans son toit fixe (2), comprenant une partie immobile (3) pour une fixation au toit fixe, portant au moins deux rails de guidage (5) à côté de l'ouverture de toit, au moins une fermeture (4) ayant un côté avant et un arrière et étant supportée par un mécanisme de fonctionnement guidé sur les rails de guidage, la fermeture étant réglable entre une position fermée, dans laquelle elle ferme l'ouverture de toit, et une position ouverte dans laquelle elle est au moins partiellement déplacée hors de l'ouverture de toit, dans laquelle le mécanisme de fonctionnement comprend au moins un premier élément de support (6) réglable supportant de manière réglable la fermeture près de son côté avant, et des deuxièmes éléments de support (7) réglables supportant de manière réglable la fermeture à une distance derrière le côté avant, la fermeture étant réglable entre une position fermée, dans laquelle elle ferme l'ouverture de toit, et une position ouverte dans laquelle elle est au moins partiellement déplacée hors de l'ouverture de toit, au moins chaque deuxième élément de support (7) ayant son propre élément menant (8, 9) pour obtenir un réglage de la fermeture à la position de l'élément de support respectif, et une unité de commande (C) comportant une mémoire pour commander des mouvements des éléments menants, **caractérisée en ce que** l'unité de commande est programmée pour réaliser une étape de procédure de réglage avant son fonctionnement normal dans laquelle les éléments menants (8, 9) respectifs sont actionnés, si nécessaire, avec la fermeture (4) dans sa position fermée souhaitée pour régler la position de la fermeture dans une direction depuis une position fermée réelle jusqu'à une position fermée souhaitée, la mémoire étant conçue pour stocker la position correspondante des éléments menants respectifs comme étant la position fermée souhaitée durant le fonctionnement normal.

6. Construction de toit ouvrant selon la revendication 5, dans laquelle l'élément menant (8, 9) et/ou au moins le deuxième élément de support (6, 7) sont adaptés pour permettre un réglage d'au moins le deuxième élément de support durant la procédure de réglage dans une direction verticale et/ou horizontale.

7. Construction de toit ouvrant selon la revendication 6, dans laquelle la vitesse de l'élément menant (8, 9) et/ou un rapport de transmission sont adaptés pour être changés durant la procédure de réglage de sorte qu'au moins le deuxième élément de support (7) soit mené à une vitesse plus faible durant la procédure de réglage par rapport à la vitesse durant un fonctionnement normal.

8. Construction de toit ouvrant selon l'une quelconque des revendications 5 à 7, dans laquelle au moins le deuxième élément de support (7) comporte un élément menant (9) horizontal combiné à une courbe verticale (22, 23), un levier (27), une broche verticale (36) ou autres.

9. Construction de toit ouvrant selon l'une quelconque des revendications 5 à 8, dans laquelle l'élément menant horizontal comporte un parmi un câble de traction (12) ayant une boucle fixée à et courant autour d'une poulie réceptrice (11) mise en prise par un moteur (10) et reliée aux premier et/ou deuxième éléments de support (6, 7) respectifs, un élément de transmission allongé sans fin, tel qu'une courroie crantée (49) menée par une roue dentée menée (50) et reliée aux premier et/ou deuxième éléments de support (6, 7) respectifs, ou un câble va-et-vient (52) mis en prise par une roue d'engrenage menée (53) et fixé aux premier et/ou deuxième éléments de support (6, 7) respectifs.

10. Construction de toit ouvrant selon la revendication 8, dans laquelle la courbe verticale (22, 23) est prévue dans une glissière menée (14) et comporte une première portion de courbe (22', 23') ayant une première inclinaison et une deuxième portion de courbe (22", 23") ayant une deuxième inclinaison, la première portion de courbe étant utilisée pour la procédure de réglage et la première inclinaison est généralement plus petite que la deuxième inclinaison.
